# EUROPÄISCHE PATENTSCHRIFT

(11) **EP 1 899 772 B1**
(45) Veröffentlichungstag und Bekanntmachung des Hinweises auf die Patenterteilung: **07.09.2011**
(21) Anmeldenummer: 06777566.8
(22) Anmeldetag: 04.07.2006
(51) Int. Cl.: G05B 19/042, G01D 9/00

(54) **VERFAHREN ZUM BETREIBEN EINER DATENSPEICHEREINHEIT FÜR DIE PROZESSAUTOMATISIERUNGSTECHNIK**
METHOD FOR OPERATION OF A DATA STORAGE UNIT FOR PROCESS AUTOMATION
PROCEDE POUR FAIRE FONCTIONNER UNE UNITE DE STOCKAGE DE DONNEES UTILISEE EN TECHNIQUE D'AUTOMATISATION DE PROCESSUS

(30) Priorität: 05.07.2005 DE 102005031666
(43) Veröffentlichungstag der Anmeldung: 19.03.2008
(73) Patentinhaber: ENDRESS + HAUSER WETZER GmbH + Co. KG, 87481 Nesselwang (DE)
(72) Erfinder: WALDHAUSER, Dieter, 87471 Durach (DE)
(74) Vertreter: Andres, Angelika Maria
(86) Internationale Anmeldenummer: PCT/EP2006/063872
(87) Internationale Veröffentlichungsnummer: WO 2007/003645

(56) Entgegenhaltungen:
- WO-A-03/029907
- WO-A-2004/027531
- DE-A1- 10 209 734
- GB-A- 2 342 453
- HADELLIS L ET AL: "An integrated approach for an interoperable industrial networking architecture consisting of heterogeneous fieldbuses" COMPUTERS IN INDUSTRY, ELSEVIER SCIENCE PUBLISHERS. AMSTERDAM, NL, Bd. 49, Nr. 3, Dezember 2002 (2002-12), Seiten 283-298, XP004393716 ISSN: 0166-3615

## Beschreibung

Die Erfindung betrifft ein Verfahren zum Betreiben einer Datenspeichereinheit für die Prozessautomatisierungstechnik, die zum Speichern von Daten, die über eine Kommunikationsleitung gesendet werden, dient und die als separate Einheit ausgebildet ist und eine Verbindung zur Kommunikationsleitung aufweist.

In der Prozessautomatisierungstechnik werden vielfach Sensoren eingesetzt, die zum Erfassen von Prozessvariablen, wie zum Beispiel Druck, Durchfluss, Temperatur etc. dienen. Eine Vielzahl solcher Sensoren wird von der Firma Endress+Hauser hergestellt und vertrieben.

In der Regel werden die Messwerte der Sensoren über Kommunikationsleitungen an Steuereinheiten weitergeleitet, die für die Prozessteuerung verantwortlich sind.

Um einen Überblick über den Prozessverlauf zu gewinnen, ist es häufig notwendig, nicht nur aktuellen Messwerte einzelner Prozessvariablen zu betrachten, sondern die zeitliche Entwicklung einzelner Messwerte. Hierzu dienen Messdatensammler, die teilweise auch als "Datenlogger" bezeichnet werden. Diese Einheiten sind mit der Kommunikationsleitung verbunden und dienen zum Speichern von Messwerten einzelner vom Anwender ausgewählten Feldgeräte. Manche Geräte erlauben das Speichern von mehr als 16000 Messwerten.

Eine komfortable Speicherung von Messwerten ermöglicht der Messdatensammler Memograph. Einfacher aufgebaut ist das Gerät Memolog. Beide Geräte werden von der Firma Endress+Hauser Wetzer GmbH+Co. KG vertrieben werden. Neben der Speicherung von Messwerten in einem separaten Messdatensammler können Messwerte auch im Feldgerät selbst gespeichert werden. Hierzu bietet die Firma Endress+Hauser Flowtec AG einen einfach handhabbaren Datenspeicher unter der Bezeichnung HistoRom an.
Bei herkömmlichen Sensoren ist eine Umrüstung auf einen im Gerät integrierten Datenspeicher meist nicht oder nur mit erheblichem Aufwand möglich.
In der Regel erfolgt das Auslesen der Messdaten über eine am Messdatensammler vorgesehene Serviceschnittstelle. Hierfür muss eine Bedieneinheit (Laptop) mit dem Messdatensammler verbunden werden. Zur Darstellung der Messwerte an der Bedieneinheit dient eine entsprechende Visualisierungssoflware (z.B. ReadWin Fa. Endress+Hauser).
Bisher ist das Auslesen der Messdaten nur über die separate Serviceschnittstelle möglich. Ein Servicetechniker muss hierfür das Gerät aufsuchen und die Messdaten aufwendig mit Hilfe einer Bedieneinheit auslesen. Diese Vorgehensweise ist außerdem zeitintensiv und teuer. Außerdem wird eine zusätzliche Schnittstelle benötigt, die einen zusätzlichen Kostenfaktor darstellt.
Aus der Offenlegungsschrift DE 10209734 A1 ist ein Verfahren zum Reduzieren einer zu übertragenden Datenmenge von Prozessdaten bekannt geworden. Dabei sind ein Feldgerät oder mehrere Feldgeräte mit Auswerte-/Steuereinheiten verbunden, welche die Daten von dem oder den Feldgeräten reduzieren. Die Auswerte-/Steuereinheiten können auch separate Einheiten sein, welche auch der Übermittlung der reduzierten Daten an eine Prozessleitstelle dienen.
Die internationale Veröffentlichung WO 20041027531 A1 zeigt ein System zum Bedienen und Beobachten eines Produktionsprozesses sowie zur Prozessdatenarchivierung für ein Historian-System. Eine Historian-Datenbank dient zur Speicherung von Prozessinformationsdaten. Der Zugriff auf den Produktionsprozess und der Zugriff auf langzeitarchivierte Daten werden in einem System ermöglicht.
Aufgabe der Erfindung ist es, ein Verfahren zum Betreiben einer Datenspeichereinheit für Kommunikationsnetzwerke der Prozessautomatisierungstechnik anzugeben, das die oben genannten Nachteile nicht aufweist, das insbesondere einen einfachen Zugriff auf die gespeicherten Daten ermöglicht.
Gelöst wird diese Aufgabe durch die im Anspruch 1 angegebenen Merkmale, die nachstehend angegeben sind.
Bei einem Verfahren zum Betreiben eine Datenspeichereinheit für die Prozessautomatisierungstechnik, die zum Speichern von Daten, die über eine Kommunikationsleitung gesendet werden, dient und die als von einem mit der Kommunikationsleitung verbundenen Feldgerät oder von mit der Kommunikationsleitung verbundenen Feldgeräten separate Einheit ausgebildet ist und die eine Verbindung zur Kommunikationsleitung aufweist, werden folgende Verfahrensschritte durchgeführt:
- Auswahl eines mit der Kommunikationsleitung verbundenen Feldgerätes
- Parametrieren der Datenspeichereinheit so, dass bestimmte Daten des ausgewählten Feldgerätes in der Datenspeichereinheit gespeichert werden können
- Erfassen der über die Kommunikationsleitung übertragenen Daten
- Selektieren der vom ausgewählten Feldgerät gesendeten Daten aus den erfassten Daten, falls Daten mehrerer Feldgeräte bzw. unterschiedliche Daten eines Feldgerätes übertragen werden
- Speichern der bestimmten Daten
- Verbinden einer Bedieneinheit mit der Kommunikationsleitung
- Kommunikation einer auf der Bedieneinheit ablaufenden Bediensoftware mit der Datenspeichereinheit, wobei eine Gerätebeschreibungsdatei verwendet wird, die die Datenspeichereinheit als Teilkomponente des ausgewählten Feldgeräts beschreibt
- Auslesen der gespeicherten Daten und Visualisierung der gespeicherten Daten an der Bedieneinheit.

Die wesentliche Idee der Erfindung besteht darin, dass die Datenspeichereinheit als separate Einheit ausgebildet ist, und der Zugriff auf die Datenspeichereinheit über die Kommunikationsleitung erfolgt, wobei eine Gerätebeschreibungsdatei für Datenspeichereinheit vorgesehen ist, die die Datenspeichereinheit als Teilkomponente des ausgewählten Sensors, dessen Daten gespeichert werden sollen, beschreibt.

Somit benötigt die Datenspeichereinheit keine separate Netzwerkadresse, sondern wird über die Adresse des ausgewählten Sensors angesprochen. Deshalb muss die Datenspeichereinheit auch nicht als separater Busteilnehmer konfiguriert werden, was die Installation der Datenspeichereinheit bei Bussystemen erheblich vereinfacht.

Gemäß Anspruch 2 ist das Verfahren besonders für die in der Prozessautomatisierungstechnik verwendeten Standards für die Datenübertragung wie Profibus, Foundation Fieldbus bzw. HART geeignet.

In vorteilhafter Weise besitzt die Datenspeichereinheit dieselbe Adresse wie das Feldgerät und stellt zusätzliche Funktionsblöcke wie z. B. Messdatenspeicherblock, Konfigurationsblock für die Messdatenspeicherung, Diagnoseblock für Messdatenspeicher etc. bereit.

Gemäß einer Weiterentwicklung nach Anspruch 4 werden die Funktionsblöcke über eine Slot/Index-Kennung angesprochen.

In vorteilhafter Weise benötigt die Datenspeichereinheit keine separate Energieversorgung, da sie entweder von einer Batterie oder über die Kommunikationsleitung selbst gespeist wird.

Nachfolgend ist die Erfindung anhand eines in der Zeichnung dargestellten Ausführungsbeispiels näher erläutert.

Es zeigen:

Fig. 1 Kommunikationsnetzwerk der Prozess-

Automatisierungstechnik mit mehreren

Feldgeräten in schematischer Darstellung;

Fig. 2 erfindungsgemäße Datenspeichereinheit;

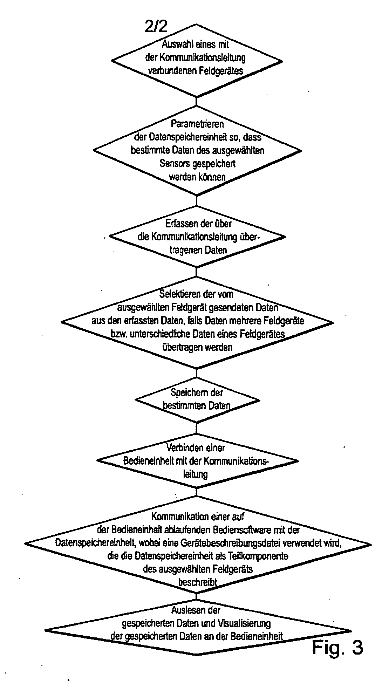

Fig. 3 Flussdiagramm.

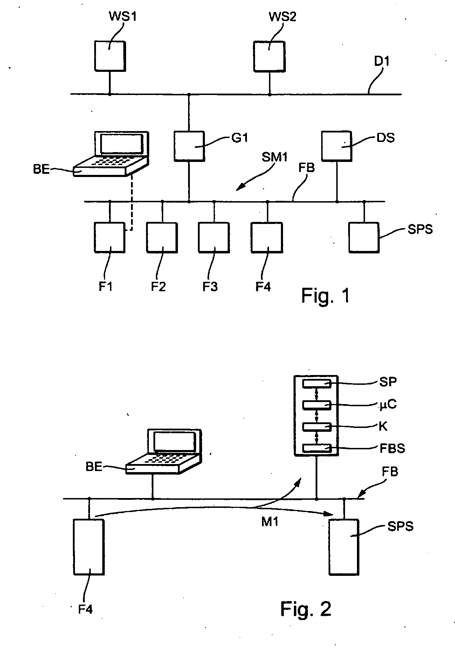

In Fig. 1 ist Kommunikationsnetzwerk der Prozessautomatisierungstechnik näher dargestellt. An einen Datenbus D1 sind mehrere Rechnereinheiten (Workstations) WS1, WS2 angeschlossen. Diese Rechnereinheiten können als übergeordnete Einheiten (Leitsysteme bzw. Steuereinheiten) zur Prozessvisualisierung, Prozessüberwachung und zum Engineering aber auch zum Bedienen und Überwachen von Feldgeräten dienen. Der Datenbus D1 arbeitet zum Beispiel nach dem Profibus DP Standard oder nach dem HSE Standard der Foundation Fieldbus. Über Gateway G1, das auch als Linking Devise oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren bzw. um Aktoren handeln. Der Feldbus FB arbeitet nach einem der bekannten Feldbusstandards Profibus, Foundation Fieldbus etc.. Mit dem Feldgerät F1 ist eine Bedieneinheit BE (z. B. Laptop) über eine am Feldgerät F1 vorgesehene Serviceschnittstelle verbunden. Diese Verbindung ist gestrichelt dargestellt. Über die Bedieneinheit BE kann ein im Feldgerät F1 vorgesehener interner Datenspeicher ausgelesen werden.

Weiterhin ist mit dem Feldbus FB eine Datenspeichereinheit DS verbunden auf deren Funktion später näher eingegangen wird.

Zur Prozesssteuerung dient eine speicherprogrammierbare Steuerungseinheit SPS, die ebenfalls mit dem Feldbus verbunden ist.

Der Feldbus FB dient somit als Kommunikationsleitung über die Daten verschiedener Feldgeräte übertragen werden. Denkbar ist auch eine HART-Verbindung zwischen den einzelnen Feldgeräten und der Steuerungseinheit SPS.

In Fig. 2 ist eine erfindungsgemäße Datenspeichereinheit DS näher dargestellt. Zur Verbindung der Datenspeichereinheit DS mit dem Feldbus FB dient eine Feldbusschnittstelle FBS. Über einen Kommunikationskontroller K ist die Feldbusschnittstelle FBS mit einem Mikrocontroller µC verbunden. Als Datenspeicher dient ein Speichermodul SP, das ebenfalls mit dem Mikrocontroller µC verbunden ist. Die Speicherkapazität des Speichermoduls SP kann typischerweise 256 MB betragen. Es handelt sich um einen bekannten EEPROM- Speicher oder einen Flash-Memory Speicher. Es sind aber auch andere Speichermedien wie z. B. USB-Stick denkbar.

Nachfolgend ist das erfindungsgemäße Verfahren näher erläutert.

Vorraussetzung ist, dass die Datenspeichereinheit DS mit der Kommunikationsleitung, über die die Daten gesendet werden, verbunden ist.

In einem ersten Verfahrensschritt wird ein Feldgerät, das mit der Kommunikationsleitung verbunden ist, ausgewählt.

Im Folgenden sei dies das Feldgerät F4.

Anschließend wird die Datenspeichereinheit DS so parametriert, dass die Daten des ausgewählten Feldgerätes F4 gespeichert werden können.

Der Datenspeicher DS hört den gesamten Datenverkehr über die Kommunikationsleitung ab. Er erfasst damit alle über diese Leitung übertragenen Daten wie Messwerte, Steuerbefehle, Statusinformationen etc..

Falls Daten von mehreren Feldgeräten oder unterschiedliche Daten eines Feldgerätes über die Kommunikationsleitung übertragen werden, müssen die bestimmten Daten d. h. gewünschten Daten selektiert werden. Ein Feldgerät kann z. B. mehrere Messwerte wie z. B. Temperatur und Durchfluss übertragen. Wenn die Durchflusswerte für den Anwender von Interesse sind müssen diese entsprechend selektiert werden.

Wenn das Feldgerät F4 einen Messwert M1 über die Kommunikationsleitung sendet, wird der entsprechende Wert in der Datenspeichereinheit DS abgespeichert.

Es ist auch denkbar, dass die Datenspeichereinheit DS in festen Abständen (z.B. alle 30 Minuten) Messwerte speichert oder nur bei bestimmten Ereignissen (z.B. Überschreitung eines Grenzwertes, bestimmter Status eines Messwertes).

Neben dem reinen Messwert M1 können auch noch Zusatzinformationen, wie z. B. eine Zeitinformation im Speicher SP abgespeichert.

Zum Abrufen der in der Datenspeichereinheit DS gespeicherten Messwerte M1 wird eine Bedieneinheit BE mit der Kommunikationsleitung verbunden.

Eine separate Serviceschnittstelle an der Datenspeichereinheit ist nicht notwendig.

Auf der Bedieneinheit ist eine Bediensoftware installiert, die die Visualisierung der im Speicher M der Datenspeichereinheit DS gespeicherten Daten ermöglicht.

Die Bediensoftware verwendet zur Kommunikation mit der Datenspeichereinheit DS eine Gerätebeschreibungsdatei, z. B. Device Description, EDD etc., die die Datenspeichereinheit DS als Teilkomponente des ausgewählten Feldgeräts F4 beschreibt. Damit ist ein Zugriff auf die in der Datenspeichereinheit DS gespeicherten Daten über die Kommunikationsleitung möglich, ohne dass bei Feldbussystemen der Datenspeichereinheit DS eine separate Netzwerkadresse zugewiesen werden muss.

Nach dem Auslesen der in der Datenspeichereinheit DS gespeicherten Daten werden diese an der Bedieneinheit BE visualisiert.

Damit erhält der Anwender einen optischen Eindruck über den zeitlichen Verlauf eines Messwertes eines bestimmten Feldgerätes.

Die Datenspeichereinheit DS kann so in einfacher Weise an vorhandene Feldbusse angeschlossen werden, um Daten einzelner Feldgeräte zu speichern.

Die Bediensoftware erlaubt auch die Datenspeichereinheit DS so zu parametrieren, dass die Messwerte des Feldgeräts F4 abgespeichert werden können.

Die Installation und die Konfigurierung der Datenspeichereinheit DS sind damit relativ einfach.

Die Datenspeichereinheit DS kann als Funktionsblock, der zu dem betreffenden Feldgerät gehört, angesehen werden, dessen Aufgabe im Speichern der Messwerte besteht.

Bei Profibus als Bussystem ist der Zugriff auf die gespeicherten Messwerte einfach über eine Slot/Index-Kennung möglich. Das Auslesen der gespeicherten Messwerte erfolgt über zwei Indizes. Mit dem ersten Index wird die Auslesung der Daten gesteuert (Einstellmöglichkeiten: Erster Datensatz, nächster Datensatz, Vorheriger Datensatz, Letzter Datensatz, Daten löschen). Über den zweiten Index werden die gespeicherten Daten ausgelesen. Beispiel: Der erste Index wird auf "Erster Datensatz" gestellt. Danach wird der erste Datensatz über den zweiten Index ausgelesen. Nach dem Auslesen wird der erste Index auf "nächster Datensatz" gestellt. Anschliessend wird der 2. Datensatz über den zweiten Index ausgelesen. Danach wird der erste Index erneut auf "nächster Datensatz" gestellt. Über den 2. Index wird jetzt der nächste (3.) Datensatz ausgelesen. Dieser Vorgang wird so lange wiederholt, bis auf dem zweiten Index eine Endekennung ausgelesen wird. Danach können die Daten über den ersten Index gelöscht werden.

Die Erfindung erlaubt es in einfacher Weise die Messwerte eines ausgewählten Feldgerätes abzuspeichern und aufzurufen.

Es können auch andere Daten von Feldgeräten, die keine Sensoren sind, abgespeichert werden. Einzige Bedingung ist, dass die Daten über die Kommunikationsleitung gesendet werden.

Die Energieversorgung der Datenspeichereinheit DS erfolgt direkt über die Kommunikationsleitung bzw. über eine in der Einheit integrierte Batterie.

### Bezugszeichenliste

| | |
|---|---|
| Bedieneinheit | BE |
| Datenbus | D1 |
| Datenspeichereinheit | DS |
| Feldbus | FB |
| Feldbusschnittstelle | FBS |
| Feldbussegment | SM1 |
| Gateway | G1 |
| Kommunikationskontroller | K |
| Messwert | M1 |
| Mikrocontroller | µC |
| Rechnereinheiten | WS1, WS2 |
| Speichermodul | SP |
| Steuerungseinheit | SPS |
| Feldgeräte | F1, F2, F3, F4 |

## Patentansprüche

1. Verfahren zum Betreiben einer Datenspeichereinheit (DS) für die Prozessautomatisierungstechnik,
die zum Speichern von Daten, die über eine Kommunikationsleitung (FB) gesendet werden, dient und
die als von einem mit der Kommunikationsleitung (FB) verbundenen Feldgerät (F4) oder von mit der Kommunikationsleitung (FB) verbundenen Feldgeräten (F1, F2, F3, F4) separate Einheit ausgebildet ist
und
die eine Verbindung zur Kommunikationsleitung (FB) aufweist, **gekennzeichnet durch** folgende Verfahrensschritte:
Auswahl eines mit der Kommunikationsleitung (FB) verbundenen Feldgerätes (F4),
Parametrieren der Datenspeichereinheit (D1) so, dass bestimmte Daten des ausgewählten Feldgerätes (F4) in der Datenspeichereinheit (D1) gespeichert werden können,
Erfassen der über die Kommunikationsleitung (FB) übertragenen Daten, Selektieren der vom ausgewählten Feldgerät (F4) gesendeten Daten aus den erfassten Daten, falls Daten mehrerer Feldgeräte (F1, F2, F3, F4) bzw. unterschiedliche Daten eines Feldgerätes (F4) übertragen werden, Speichern der bestimmten Daten,
Verbinden einer Bedieneinheit (BE) mit der Kommunikationsleitung (FB), Kommunikation einer auf der Bedieneinheit (BE) ablaufenden Bediensoftware mit der Datenspeichereinheit (D1), wobei eine Gerätebeschreibungsdatei verwendet wird, die die Datenspeichereinheit (D1) als Teilkomponente des ausgewählten Feldgeräts (F4) beschreibt, Auslesen der gespeicherten Daten und Visualisierung der gespeicherten Daten an der Bedieneinheit (BE).

2. Verfahren nach Anspruch 1, **dadurch gekennzeichnet, dass** die Datenübertragung auf der Kommunikationsleitung (FB) nach einem der Standards wie z. B. Profibus, Foundation Fieldbus oder Hart erfolgt.

3. Verfahren nach Anspruch 2, **dadurch gekennzeichnet, dass** die Datenspeichereinheit (D1) über dieselbe Busadresse wie das Feldgerät (F4) angesprochen wird und zusätzliche Funktionsblöcke bereitstellt.

4. Verfahren nach Anspruch 3, **dadurch gekennzeichnet, dass** die Datenspeichereinheit (D1) die gleiche Busadresse wie das Feldgerät (F4) besitzt und die Funktionsblöcke über eine Slot/Index-Kennungen angesprochen werden.

5. Verfahren nach einem der vorhergehenden Ansprüche, **dadurch gekennzeichnet, dass** die Energieversorgung der Datenspeichereinheit (D1) entweder durch eine Batterie oder über die Kommunikationsleitung (FB) erfolgt.

## Claims

1. Method to operate a data storage unit (DS) for process engineering technology, which is used to save data that are sent via a communication cable (FB) and which is designed as a separate unit from the field device (F4) connected to the communication cable (FB), or from field devices (F1, F2, F3, F4) connected to the communication cable (FB)
and
which has a connection to the communication cable (FB), **characterized in** the following steps:
Selection of a field device (F4) connected to the communication cable (F4),
Configuration of the data storage unit (DS) in such a way that certain data of the selected field device (F4) can be saved in the data storage unit (DS),
Recording of the data transmitted via the communication cable (FB),
Selection of the data sent by the selected field device (F4) from the data recorded if data from several field devices (F1, F2, F3, F4) or different data from a field device (F4) are transmitted,
Storage of certain data,
Connection of an operating unit (BE) with the communication cable (FB),
Communication between an operating software running on the operating unit (BE) and the data storage unit (DS), where a device description file is used which describes the data storage unit (DS) as a subcomponent of the selected field device (F4),
Export of the stored data and visualization of the stored data on the operating unit (BE).

2. Method as per Claim 1, **characterized in that** the data are transmitted on the communication cable (FB) as per one of the communication standards, e.g. Profibus, Foundation Fieldbus or Hart.

3. Method as per Claim 2, **characterized in that** the data storage unit (DS) is addressed via the same bus address as the field device (F4) and makes additional function blocks available.

4. Method as per Claim 3, **characterized in that** the data storage unit (DS) has the same bus address as the field device (F4) and the function blocks are addressed via a slot/index ID.

5. Method as per one of the previous claims, **characterized in that** power is supplied to the data storage unit (DS) either via a battery or via the communication cable (FB).

## Revendications

1. Procédé destiné à l'exploitation d'une unité de mémoire de données (DS) destinée à la technique d'automatisation des process,
qui sert à la mémorisation de données , qui sont émises par l'intermédiaire d'une ligne de communication (FB), et
qui est constituée sous la forme d'une unité séparée avec un appareil de terrain (F4) relié à la ligne de communication (FB) ou avec des appareils de terrain (F1, F2, F3, F4) reliés à la ligne de communication (FB)
et
qui présente une liaison avec la ligne de communication
**caractérisé par** les étapes de procédé suivantes :
Sélection d'un appareil de terrain (F4) relié à la ligne de communication (FB),
Paramétrage de l'unité de mémoire de données (DS), de telle sorte que des données définies de l'appareil de terrain (F4) sélectionné puissent être enregistrées dans l'unité de mémoire de données (DS),
Saisie des données transmises via la ligne de communication (FB),
Sélection des données émises par l'appareil de terrain (F4) à partir des données saisies, au cas où des données de plusieurs appareils de terrain (F1, F2, F3, F4) ou différentes données d'un appareil de terrain (F4) sont transmises,
Mémorisation des données définies,
Connexion d'une unité de commande (BE) avec la ligne de communication (FB),
Communication d'un logiciel d'exploitation tournant sur l'unité de commande (BE) avec l'unité de mémoire de données (DS), un fichier de description d'appareil étant utilisé pour décrire l'unité de mémoire de données (DS) en tant que composant partiel de l'appareil de terrain (F4) sélectionné,
Lecture des données mémorisées et visualisation des données mémorisées sur l'unité de commande (BE).

2. Procédé selon la revendication 1, **caractérisé en ce que** la transmission de données sur la ligne de communication (FB) est réalisée d'après l'un des protocoles standard tels que Profibus, Foundation Fieldbus ou Hart.

3. Procédé selon la revendication 2, **caractérisé en ce que** l'unité de mémoire de données (DS) est adressée par l'intermédiaire de la même adresse de bus que l'appareil de terrain (F4) et met à disposition des blocs fonctionnels supplémentaires.

4. Procédé selon la revendication 3, **caractérisé en ce que** l'unité de données de mémoire (DS) possède la même adresse de bus que l'appareil de terrain (F4) et que les blocs fonctionnels sont adressés par l'intermédiaire d'identificateurs de slot / d'index.

5. Procédé selon l'une des revendications précédentes, **caractérisé en ce que** l'alimentation en énergie de l'unité de mémoire de données (DS) intervient soit au moyen d'une pile, soit par l'intermédiaire de la ligne de communication (FB).
